# EUROPEAN PATENT SPECIFICATION

(11) **EP 1 991 403 B1**
(45) Date of publication and mention of the grant of the patent: **16.05.2012**
(21) Application number: 07726657.5
(22) Date of filing: 06.03.2007
(51) Int. Cl.: B29B 13/00, C08F 6/00

(54) **APPARATUS AND METHOD FOR DEGASSING POLYMER POWDER**
VORRICHTUNG UND VERFAHREN ZUR ENTGASUNG VON POLYMERPULVER
APPAREIL ET PROCEDE DE DEGAZAGE D'UNE POUDRE POLYMERE

(30) Priority: 07.03.2006 EP 06110782
(43) Date of publication of application: 19.11.2008
(73) Proprietor: TOTAL PETROCHEMICALS RESEARCH FELUY, 7181 Seneffe (Feluy) (BE)
(72) Inventor: DAMME, Eric, B-7181 Arquennes (BE)
(74) Representative: Leyder, Francis
(86) International application number: PCT/EP2007/052099
(87) International publication number: WO 2007/101856

(56) References cited:
- EP-A- 0 075 899
- EP-A- 0 801 081
- GB-A- 2 271 114
- US-A- 4 372 758
- US-A- 4 758 654

## Description

### FIELD OF THE INVENTION

The invention relates to an apparatus according to claim 1 for degassing polymer powder comprising a chamber having a first end and a second end opposite to each other, said chamber being equipped with at least one powder inlet and at least one gas outlet at the first end and with at least one powder outlet and at least one gas inlet at the second end, and a valve provided with a powder entry and a powder exit and arranged at the powder outlet of said chamber. The present invention also relates to a method according to claim 7 for degassing polymer powder comprising flushing the polymer powder in a chamber with a flow of flushing gas.

### BACKGROUND OF THE INVENTION

In the present description, by polymerisation process, it is meant a process for polymerising at least one monomer, and a manufacturing process of a polymer is used in the meaning of the whole process, comprising the polymerisation process and any further treatments, such as degassing, additivation, compounding and/or pelletising.

In a polymerisation process, the polymer is typically recovered from the reactor in the form of a polymer powder, either as such or in slurry, depending on the process. The polymer powder also typically contains a certain amount of unreacted monomer and possibly residues of solvent that need to be removed from the powder before further use. This invention relates to the cases wherein the monomer and possible solvent is in the form of gas at some point of the manufacturing process. The removal of these undesired gases in such cases is typically made by degassing the polymer powder by flushing it with a flow of flushing gas. In the case of polyolefin manufacture, the gases to be removed are usually hydrocarbon gases such as ethylene, propylene, hexene, butane, octene, decene etc. In this description, the term residual gas is used to designate the mixture of all the products that need to be removed from the polymer powder, including products that are in the form of gases as well as liquids. The term residual gas is also used interchangeably with the term hydrocarbons when discussing their elimination from the system.

One method for flushing a polymer powder consists in introducing the polymer powder in a purge column and injecting a flow of nitrogen gas to said column from the bottom. The nitrogen enters into contact with the polymer powder that in the case of polyolefins has a residence time of about 0.5 to 10 hours in the purge column. A flow of nitrogen and of the residual gas exits the purge column via a gas outlet and is directed to an appropriate treatment device via a gas discharge line. The problem with these apparatuses is that a certain amount of the flushing gas, i.e. nitrogen, is also stripped with the polymer powder to the outlet of the degassing chamber and as much as 50 % of it can be lost as this residual flushing gas is directed to the gas discharge line.

GB 2 271 114 discloses an apparatus for degassing polymer powder according to the preamble of claim 1 and a process according to the preamble of claim 7 for removing unpolymerized monomers by passing a solid polymeric resin from a drying vessel via a valve into a first vacuum vessel where gaseous hydrocarbons are removed via a conduit. The resin then passes via a valve into a first pressure vessel pressurized with inert gas via a conduit, following which it is fed to a second vacuum vessel before being discharged through a valve.

EP 0 075 899 discloses a process for transferring solids contained in a first gaseous medium and at a controlled pressure from a first zone into a second zone containing a second gaseous medium under a controlled pressure by utilizing a gas barrier which prevents passage of gas from said second zone to the first zone.

### OBJECTS AND SUMMARY OF THE INVENTION

It is an object of the present invention to minimise the loss of flushing and transfer gas and to decrease the cost of production of polymers. Another object of the invention is to enhance the recycling of the gases used in a polymer manufacturing process.

A further object of the present invention is to provide a method for degassing a polymer powder that is more effective that the currently known methods. It is also an object to further decrease the amount of hydrocarbons at a powder outlet especially in a polyethylene manufacturing process.

At least one of the above objects is at least partially achieved by the means of the present invention, namely an apparatus for degassing polymer powder comprising a chamber having a first end and a second end opposite to each other, said chamber being equipped with at least one powder inlet and at least one gas outlet at the first end and with at least one powder outlet and at least one gas inlet at the second end, and a valve provided with a powder entry and a powder exit and arranged at the powder outlet of said chamber. The apparatus is characterised in that said chamber is equipped with a gas line joining a gas exit of the valve to the inside of the chamber at a position that is at a distance h₂ from the first end said distance h₂ being 20-70% of the height H of the chamber and at a distance l₁ from a wall of said chamber, said distance l₁ being 20-50 % of the largest diameter L of the chamber.

The present invention further relates to a method for degassing polymer powder comprising flushing the polymer powder in a chamber with a flow of flushing gas, wherein at least a part of flushing gas exiting the chamber through a powder outlet is re-introduced into said chamber.

### BRIEF DESCRIPTION OF THE DRAWING

Figure 1 shows schematically a system useful in a method according to the invention.
Figure 2 shows schematically an apparatus according to a first embodiment of the invention.
Figure 3 shows schematically a system useful in a method according to the invention.
Figure 4 shows schematically a part of a system useful in a method according to the invention.
Figure 5 shows schematically an apparatus according to a second embodiment of the invention.
Figure 6 shows schematically a system useful in a method according to the invention.
Figure 7 shows schematically a system useful in a method according to the invention.

### DETAILED DESCRIPTION OF THE INVENTION

The present invention relates to an apparatus for degassing polymer powder comprising a chamber having a first end and a second end opposite to each other, said chamber being equipped with at least one powder inlet and at least one gas outlet at the first end and with at least one powder outlet and at least one gas inlet at the second end, and a valve provided with a powder entry and a powder exit and arranged at the powder outlet of said chamber. The apparatus is characterised in that said chamber is equipped with a gas line joining a gas exit of the valve to the inside of the chamber at a position that is at a distance h₂ from the first end, said distance h₂ being 20-70% of the height H of the chamber and at a distance l₁ from a wall of said chamber, said distance l₁ being 20-50 % of the largest diameter L of the chamber.

The present invention thus provides an apparatus wherein the loss of flushing and transfer gas is reduced. Indeed, when the at least partially degassed polymer powder exits the chamber by the powder outlet, it strips flushing gas with it when exiting the chamber, as much as up to 50 % of the flushing gas introduced to the chamber. A part of this residual flushing gas enters the further steps of the manufacturing process. Moreover, if a transfer gas is used to transfer the polymer powder from the powder outlet to a further process step, a part of this transfer gas enters to the powder outlet and typically leaks out of the system. The leakage can be also as high as 50 % of the transfer gas introduced into the process. In order to minimise these leaks as well as to reduce the amount of flushing gas entering the further steps of the manufacturing process, it is desired to re-introduce the residual flushing gas and/or the leaking transfer gas to the process. Therefore, a gas line is provided with a gas outlet that allows for the gases at the powder outlet to be removed and re-introduced into the chamber. This re-introduction is made inside the chamber such that it re-enters into contact with the polymer powder and is thus re-used for flushing. This leads to a reduction of loss of residual flushing gas and transfer gas as well as to a decrease of the cost of production of polymers. It is to be noticed that the gas that comes from the powder outlet of the first chamber and goes back to the chamber consists essentially of transfer gas and of a small fraction of flushing gas.

The gas line used for re-introducing the gases into the chamber may also be equipped with a suitable device for removing any polymer particles.

The word "chamber" as used in this description means a physical entity in the form of an essentially closed space. A chamber can for example be a vessel, such as a bin or a column, or a vessel can be divided into two, three, four or more chambers.

According to an embodiment of the invention, the distance h₂ is 20-70 % of the height H of the chamber. This distance can also be from 20, 25, 30, 35, 40, 45, 50, 55, 60, 65 % up to 30, 35, 40, 45, 50, 55, 60, 65, 70 % of the height H of the chamber. By height it is meant here the dimension that separates the end of the chamber comprising the powder inlet, i.e. the first end from the end of the chamber comprising the powder outlet, i.e. the second end, these two being typically at opposite ends of the chamber. Should this not be the case, height is meant to mean the largest dimension of the chamber.

According to another embodiment of the invention, the distance l₁ is 20-50 % of the largest diameter L of the chamber. This distance can also be from 20, 22, 25, 30, 35, 40 or 45 % up to 25, 30, 35, 40, 45 or 50 % of the largest diameter L of the chamber. Preferably, the distance l₁ is 30-50%, most preferably 40-50% of the largest diameter L of the chamber. The distances of l₁ can be combined with any one of the distances of h₂ given in the above embodiment. The largest diameter in the most typical case of cylindrical chamber is the diameter of the chamber in the transverse direction, i.e. at the direction of a plane perpendicular to a plane of the direction of the height. According to a preferred embodiment, the position at the upper end of the chamber and inside thereof, is arranged such that it is essentially below the level of polymer powder when the system is in use.

According to a preferred embodiment of the invention, the valve is a rotary valve. Any other type of valve or device can be used, as is readily clear to a person skilled in the art depending on the equipment following the chamber. For example, slide valves or screws can be used. According to another embodiment of the invention, the second valve, i.e. that arranged on the gas line is a ball valve. Any other valve used with powder may also be used, slide valve being preferred when the powder is transferred by gravity flow. The gas line may also be equipped with a valve for opening and closing it. According to yet another embodiment of the invention, the chamber is a purge column or a feed bin. In a general manner, the apparatus according to the present invention can be used in any kind of chambers where the above-mentioned problems arise.

In the present invention, it is also possible to use any other transfer system, such as a transfer vessel.

The present invention further relates to a method for degassing polymer comprising flushing the polymer powder in a chamber with a flow of flushing gas, wherein at least a part of flushing gas exiting the chamber through a powder outlet is re-introduced into said chamber below the level of the polymer powder. The apparatus described above is naturally useful in the present method and has the same advantages than the apparatus described above.

According to an embodiment of the invention, said re-introduction is made at a position that is at a distance (h₂) from the first end of the chamber 1, said distance (h₂) being 20-70% of the height (H) of the chamber (1) and at a distance (l₁) from a wall (22) of said chamber (1), said distance being 20-50 % of the largest diameter (L) of the chamber (1) and such that the re-introduction is made below the level of the polymer powder.

According to an embodiment, the distance h₂ can be from 20, 25, 30, 35, 40, 45, 50, 55, 60, 65 % up to 30, 35, 40, 45, 50, 55, 60, 65, 70% of the height H of the chamber.

According to another embodiment, the distance l₁ can also be from 20, 25, 30, 35, 40 or 45 % up to 25, 30, 35, 40, 45 or 50 % of the largest diameter L of the chamber. Preferably, the distance l₁ is 30-50%, most preferably 40-50% of the largest diameter L of the chamber. The distances l₁ can be combined with any one of the distances of h₂ given in the above embodiment.

Wherever the re-introduction of the flushing gas occurs in the chamber, it is always below the level of the polymer powder.

According to yet another embodiment of the invention, the flow of flushing gas entering the chamber has a flux of 100-300 kg/h, preferably 150-300 kg/h and more preferably 200-300 kg/h. Expressed per ton/hour of polymer, the flow of flushing.gas entering the chamber has a flux of 5-50 kg/h. According to a preferred embodiment, the gas used for flushing is an inert gas, typically nitrogen. Inert gas is preferred in order to avoid any degradation of the product by oxygen and to avoid any risk of explosion.

The method according to the present invention may further comprise the steps of transferring the polymer powder into a second chamber and flushing the polymer powder with a second flow of flushing gas in the second chamber. Accordingly, the apparatus according to the present invention may also comprise means for transferring the polymer powder from a first chamber into a second chamber, and a second chamber equipped with at least one gas inlet and at least one gas outlet for a flushing gas. Either or both of these two chambers can be equipped with the apparatus according to the present invention.

The details and embodiment described above in connection with the apparatus according to the present invention also apply to the present method and *vice versa.*

The apparatus according to the present invention can also be used in a method for degassing polymer powder comprising flushing the polymer powder in a first chamber with a first flow of flushing gas, transferring the polymer powder into a second chamber and flushing the polymer powder with a second flow of flushing gas in said second chamber. The chamber of the apparatus according to the present invention can be either or both of the two chambers of this method.

In said method the polymer powder is degassed in two different chambers and in a manner more effective than in the currently known methods. In some known manufacturing processes, the polymer powder is first flushed, i.e. degassed in a purge column and then transferred into a feed bin of an extruder. In a feed bin for extrusion, typically a low flux of nitrogen is used in order to keep the polymer powder under an overpressure in order to avoid contamination with oxygen before the extrusion. The flux of nitrogen used is however insufficient for flushing the polymer powder in the sense flushing is used in this description.

This method is especially suitable for use in a slurry process, such as a loop process for manufacturing polyolefins such as polyethylene and polypropylene. The combination of the present invention with this method thus allows the reduction of the amount of hydrocarbons at the powder outlet before extrusion, especially in a manufacturing process for polyethylene comprising two loop reactors in series.

When preparing a polyethylene with a loop process, the amount of hydrocarbons at the powder outlet of the first chamber can be for example about 50-100 ppm, and with the present method, the final amount of hydrocarbons at the powder outlet of the second chamber can be reduced to as low as 5 ppm. It is thus possible to reduce the amount of residual gases in the polymer powder to an amount well below the required limit and without increasing the time needed for degassing. Indeed, it is possible to reduce the amount of hydrocarbons from 50 to 5 ppm with a total residence time of three hours (that is typically used in a process without a second flushing), when the residence time in the first chamber is about two hours and in the second chamber about one hour. The inventors were indeed surprised to find out that a second flushing reduces the amount of residual gas to such an extent. An increase in the residence time of the polymer powder or an increase in the flux of the flushing gas would not have the same effect.

According to an embodiment, the first flow of flushing gas has a flux of 5-50 kg/h of nitrogen per ton/hour of polymer. Preferably a flux of more than 8 kg/h of nitrogen per ton/hour of polymer and on the other hand, a flux of less than 15 kg/h of nitrogen per ton/hour of polymer is used. According to another embodiment the second flow of flushing gas has a flux of 5-50 kg/h, of nitrogen per ton/hour of polymer. Preferably a flux of more than 8 kg/h of nitrogen per ton/hour of polymer and on the other hand, a flux of less than 20 kg/h of nitrogen per ton/hour of polymer is used.

According to an embodiment, the transfer of the polymer powder is made by means of gravity. This means that the first and second chambers are placed on top of one another, and the polymer powder is allowed to flow freely from the first chamber to the second chamber. The powder outlet of the first chamber may also be equipped with a valve to control the flow of the polymer powder. This valve can be the same that is connected to the gas line for residual flushing gas.

According to an alternative embodiment, the transfer of the polymer powder is made by means of a flow of a transfer gas, i.e. a pneumatic transfer. The transfer gas is injected into a flow of polymer powder at or near the powder outlet of the first chamber and it transfers the polymer powder to the second chamber, while at the same time mixing the polymer powder to some extent. The flux of the transfer gas is typically about 200 kg/h of transfer gas per ton of polymer, the velocity in the lines being typically about 20 m/s.

According to a preferred embodiment, the gas used for transfer is also an inert gas, typically nitrogen.

The apparatus according to the present invention can further be used in a system for degassing polymer powder comprising
- a first chamber equipped with at least one gas inlet and at least one gas outlet for a flushing gas;
- means for transferring the polymer powder from said first chamber into a second chamber, and
- a second chamber equipped with at least one gas inlet and at least one gas outlet for a flushing gas.

According to an embodiment, the means for transferring the polymer powder is a transfer line. The transfer line may be any suitable line known per se for transfer or transport of a polymer powder. The transfer line may be a straight line that connects the first and second chambers positioned one above another, or it may be a longer line, depending on the layout of the manufacturing system. The transfer may be made by gravity or by means of a transfer gas. Should the option of gravity be chosen, the transfer line is preferably equipped with a mixer in order to enhance the mixing of the polymer powder between the two chambers. Should a transfer gas be chosen, the transfer line is equipped with a gas inlet for a transfer gas. The transfer gas may circulate in a closed circuit, preferably equipped with appropriate means for eliminating any possible residues of polymer particles before the transfer gas is re-used for transfer. The degassing can also be made to a certain extent in the transfer gas circuit, which is then equipped with appropriate devices for eliminating the degassed hydrocarbons.

The system comprises at least two different chambers. The chambers may be of any suitable kind known to a person skilled in the art. The system may also comprise three, four, five or more chambers equipped with gas inlets and outlets. According to an embodiment the first chamber is a purge column. Said purge column can be for example positioned under flash tank connected to a slurry reactor. The second chamber may be a feed bin, such as a feed bin of an extruder. The chambers used in the present invention may also comprise more than one gas inlet and gas outlet.

According to an embodiment, the residence time of the polymer powder in the chambers is 0.5-10 hours. The residence time can be from 0.5, 1, 1.5, 2, 3 or 5 hours up to 1, 1.5, 2, 3, 5 or 10 hours.

The further details and embodiments described above in connection with the method and/or apparatus according to the invention also apply to the uses in the method and/or system described above.

The present invention also relates to the use of an apparatus according to the present invention in a polyolefin manufacturing process comprising two loop reactors in series. The details and embodiments described above in connection with the method and apparatus also apply to the use according to the invention.

In any of the embodiments described above, any gas outlet within a chamber may be equipped with a device suitable for distributing the gas more uniformly within the chamber. Such device can be for example a screen in the form of a cone. Also, it is possible to use a manifold with multiple injection points. It is also naturally possible to use two or more of the systems according to the present invention in parallel.

The invention can also be implemented by appropriately combining two or more embodiments mentioned in this description.

### DETAILED DESCRIPTION OF THE DRAWING

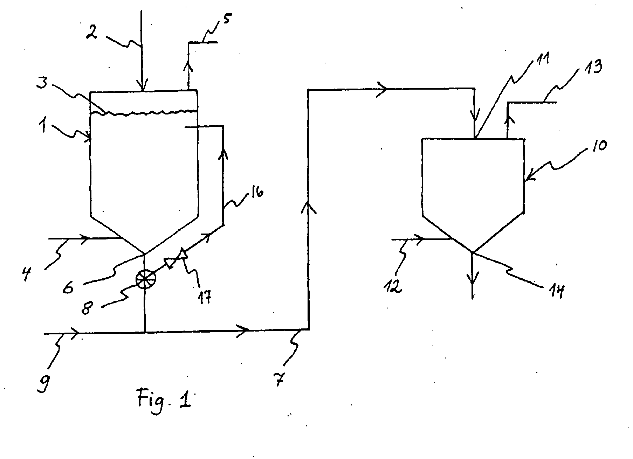

Figure 1 shows schematically a system useful in a method according to the invention. The system comprises a first chamber 1 that is a purge column. Polymer powder enters the first chamber 1 by feed line 2 via a powder inlet. The level of the polymer powder is represented schematically at the reference number 3. A flow 4 of flushing gas, here nitrogen, enters the first chamber 1 via a flushing gas inlet arranged at the bottom part (second end) of the first chamber 1. The flow of nitrogen enters into contact with the polymer powder within chamber 1 and removes a part of the residual gases present in the polymer powder. A flow 5 of nitrogen and residual gases then exits the first chamber 1 via a gas outlet arranged at the top part (first end) of the first chamber 1.

From the powder outlet 6, the polymer powder enters a transfer line 7, equipped with a valve 8, which is a rotational valve in this case. A flow of transfer gas 9 enters into contact with the polymer powder and transfers the polymer powder to a powder inlet 11 of a second chamber 10, which in this case is a feed bin. Said second chamber 10 is also equipped with a gas inlet and a gas outlet, and a flow 12 of flushing gas, also nitrogen, enters the second chamber 10 at said gas inlet arranged at the bottom part of the second chamber 10, and a flow 13 of nitrogen and residual gas exits the second chamber 10 by said gas outlet.

The system according to this embodiment is further equipped with an additional apparatus for allowing the correct functioning of the valve 8. This apparatus consists in an additional gas line 16 joining a gas exit or outlet of the valve 8 to the upper part of the first chamber 1. This gas line 16 is provided with a valve 17 for opening and closing said gas line 16.

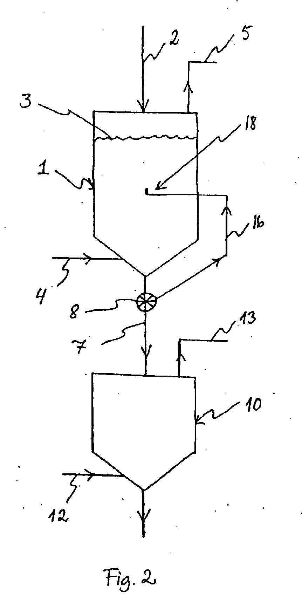

Figure 2 shows schematically an apparatus according to a first embodiment of the invention. This embodiment differs from that of Figure 1 in that the first and second chambers are arranged so that the first chamber 1 is on top of the second chamber 10 and the transfer line 7 is not equipped with a transfer gas inlet. The transfer of polymer powder from the first chamber 1 to the second chamber 10 is thus made by gravity.

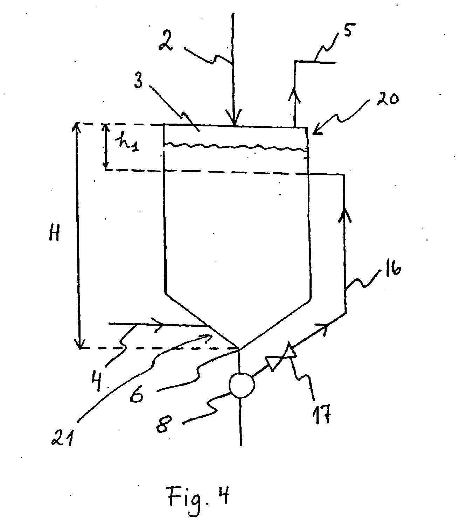

The system according to this embodiment is equipped with an apparatus according to the present invention for reducing the losses of the flushing gas in the first chamber 1 and for recycling the flushing gas in said first chamber 1. This apparatus is different from the first apparatus explained in connection with Figure 1 or 4 in that the gas line 16 does not comprise a valve. The second end of the gas line (its first end being connected to the valve 8) is positioned inside the first chamber 1, at a position that is in the centre of the chamber when seen in transverse direction and approximately in the centre of the chamber when seen in height direction.

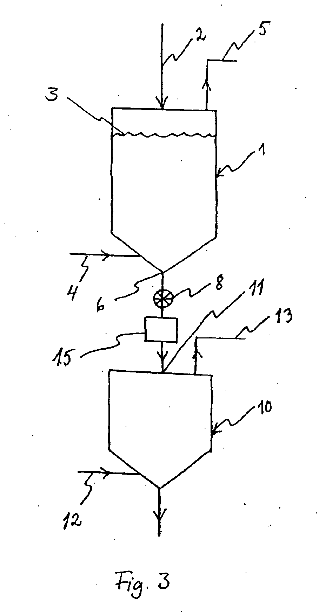

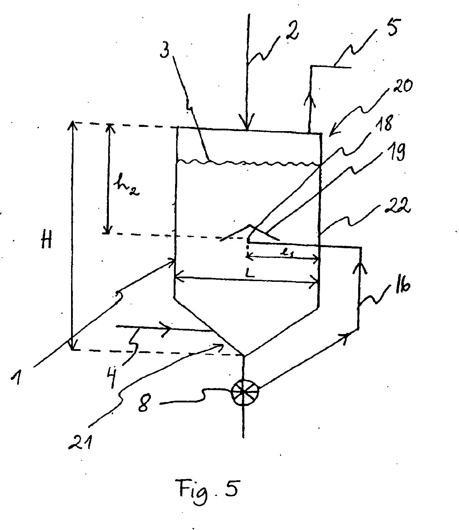

Figure 3 shows schematically a system useful in a method according to the invention. This embodiment differs from that of Figure 2 in that a mixer 15 is arranged between the rotational valve 8 and the powder inlet 11 of the second chamber 10. The mixer 15 further enhances the mixing of the polymer powder entering the second chamber 10. The system described in Figure 3 can also be equipped with an apparatus explained in connection with Figure 2 or 5, although for sake of clarity it is not shown here.

Figure 4 shows schematically an additional apparatus useful in a method according to the invention. In this embodiment a gas line 16 has its first end connected to a gas exit of a valve 8 positioned at the bottom of the chamber for outgoing polymer powder. The valve 8 is provided with a gas outlet that allows for at least a part of the residual flushing gas remaining in the polymer powder entering the valve 8 to be removed and re-introduced into the chamber at its upper end. The second end of the gas line 16 is thus positioned on the upper part of the chamber, at a height h₁, which in this embodiment is approximately 20 % of the height H of the chamber, measured from the upper end of the chamber, i.e. from the end wherein the polymer powder enters the chamber and below the level of the polymer powder. From there, the residual flushing gas is removed via the gas outlet 5. A valve 17 is provided on the gas line 16 for opening and closing it. Typically, the valve is closed during the start of the manufacturing process and is opened once the process runs steadily.

Figure 5 shows schematically an apparatus according to a second embodiment of the invention. The reference numbers used have the same meaning than those of Figures 1 to 4. This embodiment differs from the embodiment explained in connection with Figure 4 in that the gas line 16 does not comprise a valve. The second end 18 of the gas line (its first end being connected to the valve 8) is positioned inside the chamber. The position of the second end 18 is in this embodiment in height h₂ approximately 48 % of the height H of the chamber, measured from the upper end of the chamber, and in the transverse direction L approximately in the middle of the reactor, i.e. at a length l₁ that is about 50 % of the maximum length L of the chamber. In the case of cylindrical chambers, L corresponds to the diameter of the chamber. The second end 18 of the gas line 16 is moreover equipped with a screen 19 in the form of a cone. This screen 19 allows for a more uniform distribution of the flushing gas entering the chamber from the second end 18 of the gas line 16. The flushing gas then enters into contact with the polymer powder instead of being immediately discarded through the gas outlet 5.

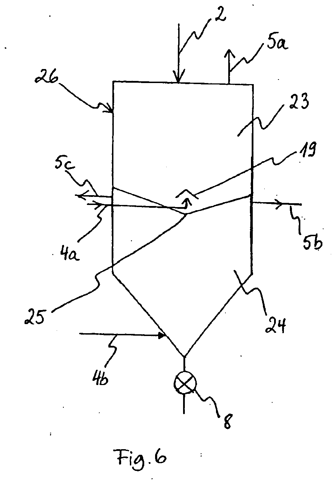

Figure 6 shows schematically a system useful in the invention. In this embodiment, the chambers 23 and 24 are positioned one above another in one chamber 26. The polymer powder is transferred from chamber 23 to chamber 24 through an orifice arranged on 25. The first chamber 23 is equipped with a gas outlet 5a and the chamber 25 is in this embodiment equipped with two gas outlets 5b and 5c. Both chambers are also equipped with flushing gas inlets 4a and 4b.

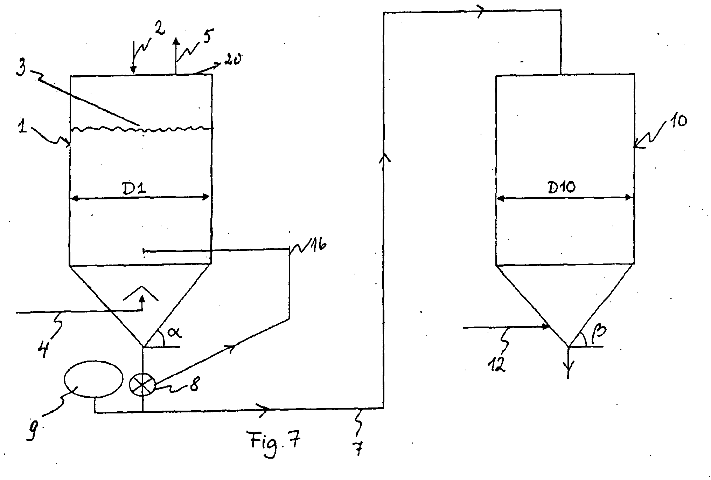

Figure 7 shows schematically a system useful in the invention. This embodiment was used in the Experimental part and will be described in more detail therein.

### EXPERIMENTAL PART

The present invention was tested in a system according to Figure 7 and as described on page 10. In this system, first and second chambers were cylindrical and the diameter D1 of the first chamber 1 was 2.8 m and the angle α at the bottom part of chamber 1 was 70°. The volume of the first chamber, here purge column was 100 m³ and flushing gas, here nitrogen, was injected to the purge column through a screen.

The diameter D10 of the second chamber 10 was 5 m and the angle β at the bottom part of chamber 10 was 60°. The volume of the second chamber, here feed bin, was 400 m³ and flushing gas, here nitrogen, was injected to the feed bin through a manifold with eight injection nozzles located at about 2 m from the bottom of the cone. Valve 8 was a rotary valve.

The system was used for degassing polyethylene coming from a double loop reactor, the polymer having a density of 0.949 g/cm³, a high load melt index HLMI of 8 g/10 min. The bulk density of the polymer was 450 g/I.

Examples 5 and 6 are according to the invention. The system according to Figure 7 was tested in examples 5 and 6. The conditions are listed in Table 1. Nitrogen was re-injected in the middle of the purge column, at a distance h₂ of about 70% of height H and at l₁ of about 50% of the largest diameter L, and below the polymer powder. Example 1 is a comparative example, in which the re-injection of nitrogen occurred at the top (20) of the first chamber and outside of the polymer powder.

Examples 5 and 6 show the effect of the re-injection of nitrogen inside the chamber under the polymer powder. The nitrogen was re-injected in the middle of the purge column at a distance h₂ of about 70% of height H and at l₁ of about 50% of the largest diameter L, according to a system shown partly in figure 5. It can be seen when looking at example 5, that if the flow of nitrogen to the purge column is lower than in comparative example 1 (200 kg/hr versus 300 kg/h), all other conditions remaining the same, the amount of hydrocarbons at the powder outlet of the purge column remains the same as that in example 1. This clearly shows that with less nitrogen, it is possible to have the same amount of hydrocarbons at the powder outlet of the purge column.

In example 6, the amount of transfer gas required is only half of that in Example 5, since due to the halved transfer pressure only half as much nitrogen gas is needed to rebalance the pressure in the nitrogen recycle unit. One can see that with less nitrogen used, it is possible to have the same amount of hydrocarbons in powder at the outlet of the feed bin, 55 ppm in both examples 5 and 6.

Examples 2 to 4 are outside of the scope of the invention. As can be seen from Table 1, when comparing for example Examples 1 and 2, when the nitrogen flow in the purge column is reduced by 50 %, and the nitrogen flow in the feed bin is increased by 500 %, the total flow of nitrogen decreasing from 330 to 300 kg/h, the amount of hydrocarbons at the outlet of the feed bin is decreased from 55 to 6
ppm. It can also be seen when looking at Example 3, that if the level of polymer in the purge column is decreased from 90 to 55 %, and the residence time decreased from about 2.5 hours to 1.5 hours, the amount of hydrocarbons at the end of the system is 10 ppm in stead of 6 ppm, i.e. still 1/5 of the amount in a typical process. In Example 4, it was noticed that when the amount of polymer in the feed bin and its residence time are increased, the amount of hydrocarbons at the end is even smaller, i.e. 4 ppm.

**Table 1**

| | | Example 1 | Example 2 | Example 3 | Example 4 | Example 5 | Example 6 |
|---|---|---|---|---|---|---|---|
| **PURGE COLUMN** | | | | | | | |
| Polymer feed rate to purge column | ton/hour | 15 | 15 | 15 | 15 | 15 | 15 |
| Hydrocarbons at powder inlet of purge column | ppm | 6000 | 6000 | 6000 | 6000 | 6000 | 6000 |
| Nitrogen flow to purge column | kg/hr | 300 | 150 | 150 | 150 | 200 | 250 |
| Level of polymer in purge column | % | 90 | 90 | 55 | 90 | 90 | 90 |
| Hold-up in purge column | tons | 37,8 | 37,8 | 23,1 | 37,8 | 37,8 | 37,8 |
| Residence time | hours | 2,52 | 2,52 | 1,54 | 2,52 | 2,52 | 2,52 |
| Hydrocarbons at powder outlet of purge column | ppm | 60 | 75 | 100 | 75 | 60 | 61 |
| Hydrocarbon in purge stream | kg/hr | 89,1 | 88,9 | 88,5 | 88,9 | 89,1 | 89,1 |
| Hydrocarbon concentration in the outgoing gas flow | weight-% | 17 | 24 | 24 | 24 | 22 | 22 |

| **TRANSFER** | | | | | | | |
|---|---|---|---|---|---|---|---|
| Transfer pressure | mbar | 700 | 700 | 700 | 700 | 700 | 350 |
| Rotary valve leakage | kg/hr | 125 | 125 | 125 | 125 | 125 | 62,5 |
| Re-injection of nitrogen | | top | top | top | top | middle | middle |

| **FEED BIN** | | | | | | | |
|---|---|---|---|---|---|---|---|
| Level of polymer in feed bin | % | 10 | 10 | 10 | 50 | 10 | 10 |
| Hold-up in feed bin | tons | 16,8 | 16,8 | 16,8 | 84 | 16,8 | 16,8 |
| Residence time | hour | 1,12 | 1,12 | 1,12 | 5,6 | 1,12 | 1,12 |
| Nitrogen flow to feed bin | kg/hr | 30 | 150 | 150 | 150 | 30 | 30 |
| Hydrocarbons in powder at the outlet of the feed bin | ppm | 55 | 6 | 10 | 4 | 55 | 55 |
| | | | | | | | |
| Total residence time in system | hour | 3,64 | 3,64 | 2,66 | 8,12 | | |

## Claims

1. An apparatus for degassing polymer powder comprising
- a chamber (1) having a first end (20) and a second end (21) opposite to each other, said chamber being equipped with at least one powder inlet and at least one gas outlet at the first end (20) and with at least one powder outlet and at least one gas inlet at the second end (21),
- a valve (8) provided with a powder entry and a powder exit and arranged at the powder outlet (6) of said chamber (1),
wherein said chamber (1) is equipped with a gas line (16) joining a gas exit of the valve (8) to the inside of the chamber (1), **characterised in that** the gas line (16) joins the inside of the chambre (1) at a position that is at a distance (h₂) from the first end (20), said distance (h₂) being 20-70% of the height (H) of the chamber (1) and at a distance (l₁) from a wall (22) of said chamber (1), said distance (l₁) being 20-50 % of the largest diameter (L) of the chamber (1).

2. Apparatus according to claim 1, **characterised in that** the distance (h₂ is 20-60 % of the height (H) of the chamber (1).

3. Apparatus according to claim 2, **characterised in that** the distance (h₂) is 30-50 % of the height (H) of the chamber (1).

4. Apparatus according to any of the previous claims, **characterised in that** the distance (l₁) is 30-50 % of the largest diameter (L) of the chamber (1).

5. Apparatus according to any of the previous claims, **characterised in that** the valve (8) is a rotary valve.

6. Apparatus according to any of the previous claims, **characterised in that** the chamber (1) is a purge column.

7. A method for degassing polymer powder comprising flushing the polymer powder in a chamber with a flow of flushing gas, wherein at least a part of flushing gas exiting the chamber through a powder outlet is re-introduced into said chamber, **characterised in that** the re-introduction is made at a position that is at a distance (h2) from the first end (20), said distance (h2) being 20-70% of the height (H) of the chamber (1) and at a distance (l₁) from a wall (22) of said chamber (1), said distance (l₁) being 20-50 % of the largest diameter (L) of the chamber (1) and such that the re-introduction is made below the level of the polymer powder.

8. Method according to claim 7, **characterised in that** the flow of flushing gas entering the chamber has a flux of 5-50 kg/h of flushing gas per ton/hour of polymer.

9. Method according to any of the claims 7-8, **characterised in that** the flushing gas is an inert gas.

10. Method according to claim 9, **characterised in that** the inert gas is nitrogen.

## Patentansprüche

1. Vorrichtung zur Entgasung von Polymerpulver, umfassend:
- eine Kammer (1) mit einem ersten Ende (20) und einem zweiten Ende (21) einander gegenüber, wobei die Kammer mit mindestens einem Pulvereinlass und mindestens einem Gasauslass am ersten Ende (20) und mit mindestens einem Pulverauslass und mindestens einem Gaseinlass am zweiten Ende (21) ausgestattet ist,
- ein Ventil (8), das mit einem Pulvereingang und einem Pulverausgang versehen und am Pulverauslass (6) der Kammer (1) angeordnet ist,
wobei die Kammer (1) mit einer Gasleitung (16) ausgestattet ist, die einen Gasausgang des Ventils (8) mit der Innenseite der Kammer (1) verbindet, **dadurch gekennzeichnet, dass** die Gasleitung (16) die Innenseite der Kammer (1) an einer Position verbindet, die in einer Entfernung (h₂) vom ersten Ende (20), wobei die Entfernung (h₂) 20 bis 70 % der Höhe (H) der Kammer (1) ist, und in einer Entfernung (l₁) von einer Wand (22) der Kammer (1) ist, wobei die Entfernung (l₁) 20 bis 50 % des größten Durchmessers (L) der Kammer (1) ist.

2. Vorrichtung nach Anspruch 1, **dadurch gekennzeichnet, dass** die Entfernung (h₂) 20 bis 60 % der Höhe (H) der Kammer (1) ist.

3. Vorrichtung nach Anspruch 2, **dadurch gekennzeichnet, dass** die Entfernung (h₂) 30 bis 50 % der Höhe (H) der Kammer (1) ist.

4. Vorrichtung nach einem der vorhergehenden Ansprüche, **dadurch gekennzeichnet, dass** die Entfernung (l₁) 30 bis 50 % des größten Durchmessers (L) der Kammer (1) ist.

5. Vorrichtung nach einem der vorhergehenden Ansprüche, **dadurch gekennzeichnet, dass** es sich bei dem Ventil (8) um ein Drehventil handelt.

6. Vorrichtung nach einem der vorhergehenden Ansprüche, **dadurch gekennzeichnet, dass** es sich bei der Kammer (1) um eine Spülsäule handelt.

7. Verfahren zur Entgasung von Polymerpulver, umfassend ein Spülen des Polymerpulvers in einer Kammer mit einem Strom von Spülgas, wobei mindestens ein Teil von Spülgas, das aus der Kammer austritt, durch einen Pulverauslass wieder in die Kammer eingeführt wird, **dadurch gekennzeichnet, dass** die Wiedereinführung an einer Position, die in einer Entfernung (h₂) vom ersten Ende (20), wobei die Entfernung (h₂) 20 bis 70 % der Höhe (H) der Kammer (1) ist, und in einer Entfernung (l₁) von einer Wand (22) der Kammer (1) ist, wobei die Entfernung (l₁) 20 bis 50 % des größten Durchmessers (L) der Kammer (1) ist, und derart erfolgt, dass die Wiedereinführung unter dem Füllstand des Polymerpulvers erfolgt.

8. Verfahren nach Anspruch 7, **dadurch gekennzeichnet, dass** der Strom von Spülgas, der in die Kammer eintritt, einen Fluss von 5 bis 50 kg/h von Spülgas pro Tonne/Stunde von Polymer aufweist.

9. Verfahren nach einem der Ansprüche 7 bis 8, **dadurch gekennzeichnet, dass** es sich bei dem Spülgas um ein Inertgas handelt.

10. Verfahren nach Anspruch 9, **dadurch gekennzeichnet, dass** es sich bei dem Inertgas um Stickstoff handelt.

## Revendications

1. Appareil de dégazage d'une poudre polymère comprenant
- une chambre (1) présentant une première extrémité (20) et une deuxième extrémité (21) opposées l'une à l'autre, ladite chambre étant équipée d'au moins un orifice d'entrée de poudre et d'au moins un orifice de sortie de gaz au niveau de la première extrémité (20) et d'au moins un orifice de sortie de poudre et d'au moins un orifice d'entrée de gaz au niveau de la deuxième extrémité (21),
- une valve (8) dotée d'un point d'entrée de poudre et d'un point de sortie de poudre, située au niveau de l'orifice de sortie de poudre (6) de ladite chambre (1),
dans lequel ladite chambre (1) est équipée d'une conduite de gaz (16) reliant un point de sortie de gaz de la valve (8) à l'intérieur de la chambre (1), **caractérisé en ce que** la conduite de gaz (16) relie l'intérieur de la chambre (1) au niveau d'une position qui est à une certaine distance (h₂) de la première extrémité (20), ladite distance (h₂) représentant 20 à 70 % de la hauteur (H) de la chambre (1), et à une certaine distance (l₁) d'une paroi (22) de ladite chambre (1), ladite distance (l₁) représentant 20 à 50 % du diamètre le plus important (L) de la chambre (1).

2. Appareil selon la revendication 1, **caractérisé en ce que** la distance (h₂) représente 20 à 60 % de la hauteur (H) de la chambre (1).

3. Appareil selon la revendication 2, **caractérisé en ce que** la distance (h₂) représente 30 à 50 % de la hauteur (H) de la chambre (1).

4. Appareil selon l'une quelconque des revendications précédentes, **caractérisé en ce que** la distance (l₁) représente 30 à 50 % du diamètre le plus important (L) de la chambre (1).

5. Appareil selon l'une quelconque des revendications précédentes, **caractérisé en ce que** la valve (8) est une valve rotative.

6. Appareil selon l'une quelconque des revendications précédentes, **caractérisé en ce que** la chambre (1) est une colonne de purge.

7. Procédé de dégazage d'une poudre polymère comprenant le rinçage de la poudre polymère dans une chambre avec un courant de gaz de rinçage, dans lequel au moins une partie du gaz de rinçage sortant de la chambre à travers un orifice de sortie de poudre est réintroduite dans ladite chambre, **caractérisé en ce que** la réintroduction est réalisée au niveau d'une position qui est à une certaine distance (h2) de la première extrémité (20), ladite distance (h2) représentant 20 à 70 % de la hauteur (H) de la chambre (1), et à une certaine distance (l₁) d'une paroi (22) de ladite chambre (1), ladite distance (l₁) représentant 20 à 50 % du diamètre le plus important (L) de la chambre (1) et étant telle que la réintroduction est réalisée sous le niveau de la poudre polymère.

8. Procédé selon la revendication 7, **caractérisé en ce que** le courant de gaz de rinçage e ntrant dans la chambre a un flux de 5 à 50 kg/h de g az de rinçage par tonne/heure de polymère.

9. Procédé selon l'une quelconque des revendications 7 et 8, **caractérisé en ce que** le gaz de rinçage est un gaz inerte.

10. Procédé selon la revendication 9, **caractérisé en ce que** le gaz inerte est de l'azote.
